# FASCICULE DE BREVET EUROPEEN

(11) **EP 3 588 903 B1**
(45) Date de publication et mention de la délivrance du brevet: **29.07.2026**
(21) Numéro de dépôt: 19180657.9
(22) Date de dépôt: 17.06.2019
(51) Int. Cl.: H04L 9/40, H04L 41/08

(54) **PROCÉDÉ, DISPOSITIF ET SERVEUR DE DISTRIBUTION SÉCURISÉE D'UNE CONFIGURATION À UN TERMINAL**
VERFAHREN, VORRICHTUNG UND SERVER ZUR GESICHERTEN ÜBERTRAGUNG EINER KONFIGURATION AN EIN ENDGERÄT
METHOD, DEVICE AND SERVER FOR SECURE DISTRIBUTION OF A CONFIGURATION WITH ONE TERMINAL

(30) Priorité: 22.06.2018 FR 1855606
(43) Date de publication de la demande: 01.01.2020
(73) Titulaire: Orange, 92130 Issy-les-Moulineaux (FR)
(72) Inventeur: GODIER, Julien, 92326 Châtillon (FR); HAMEL, Matthias, 92326 Châtillon (FR); FERRIEUX, Alexandre, 92326 Châtillon (FR)

(56) Documents cités:
- US-A1- 2005 044 227
- US-A1- 2009 125 633
- US-A1- 2013 110 728
- US-A1- 2014 317 713
- US-A1- 2015 295 890

## Description

### Domaine technique

L'invention appartient au domaine des télécommunications, et concerne plus particulièrement un procédé pour distribuer des éléments d'authentification à des équipements à partir d'un serveur.

### Art antérieur

Pour permettre des connexions privées et sécurisées sur internet, il est fréquent de mettre en œuvre des solutions de réseaux privés virtuels (VPN, pour Virtual Private Network en anglais). Les VPN permettent d'accéder à des ordinateurs ou équipements distants de la même façon que s'ils étaient sur un réseau local. Les communications au travers d'un VPN sont généralement chiffrées et authentifiées.

On connait deux principales techniques pour mettre en place un VPN.

Une première technique consiste à monter un tunnel IPSec à l'aide d'un logiciel client installé sur les équipements concernés. Les éléments d'authentification peuvent être de différentes natures (clé partagées, certificats X.509). Le contrôle de la distribution de ces certificats repose soit sur des procédures manuelles, soit sur un système d'authentification préexistant tel que la technologie Active Directory de Microsoft^{™}. L'authentification peut porter sur le système et/ou l'utilisateur qui se connecte.

Une seconde technique, VPN SSL, ne nécessite pas l'installation d'un logiciel client et peut être mis en œuvre à l'aide d'un simple navigateur internet. Les éléments d'authentification ne permettent en général pas d'authentifier le terminal qui se connecte : l'authentification porte sur l'utilisateur qui se connecte et non le système. Si l'authentification du terminal est implémentée, elle repose sur une distribution de clé ou certificats soit de manière manuelle, soit en se reposant sur un système d'authentification préexistant.

Les VPN sont par exemple utilisés pour se connecter à distance à un équipement situé dans un réseau privé, par exemple au sein d'un réseau local d'entreprise. De tels équipements sont par exemple des sondes réseaux déployées par une société de maintenance dans des réseaux d'entreprises. La société de maintenance peut alors utiliser une connexion VPN pour accéder à distance à une sonde particulière et obtenir des informations sur la qualité de service au sein du réseau d'entreprise.

Pour des raisons de coût de production, de telles sondes peuvent initialement être configurées de manière identique en sortie d'usine. Par exemple elles partagent un identifiant générique et un couple de clef privée et publique partagé par toutes les sondes.

Afin de garantir la sécurité, chaque sonde doit pourtant être configurée de façon personnalisée lors de son activation dans un réseau local. La personnalisation d'une sonde comprend au moins l'affectation d'un identifiant unique et d'un couple clef privée/clef publique unique pour cette sonde.

De manière classique, la configuration d'une telle sonde nécessite un accès physique à la sonde afin d'y configurer un jeu de clef privée/publique. L'une des principales difficultés consiste à distribuer les éléments d'authentification permettant de chiffrer les communications VPN.

Il n'est pas toujours possible d'accéder facilement à la sonde pour y configurer un jeu de clefs, notamment lorsqu'un grand nombre de sondes sont déployées chez différents clients. Il existe donc un besoin pour une méthode permettant de configurer de manière sécurisée un tel dispositif à distance. En particulier, la configuration doit être transmise à l'équipement de manière sécurisée, c'est-à-dire sans qu'elle puisse être interceptée par un tiers, et en étant certain de l'identité de l'équipement auquel la clef est distribuée. US 2013/110728 divulgue un processus de validation de l'identité d'un terminal avec l'aide d'un appareil mobile. US 2005/044227 divulgue un client qui adresse une requête à un serveur en y associant un numéro de port.

### Résumé de l'invention

A cet effet il est proposé un procédé de distribution par un serveur d'une configuration destinée à au moins un premier terminal, le procédé comprenant l'établissement, à l'initiative du premier terminal, d'une connexion entre le premier terminal et le serveur, la connexion étant configurée pour rediriger vers le premier terminal au moins une demande de connexion reçue par le serveur sur un port de communication, le procédé tel que le numéro du port de communication est dérivé à partir d'un identifiant du premier terminal reçu dans un message d'établissement de la connexion, et tel que, lorsque l'identifiant du terminal est un identifiant associé à une pluralité de terminaux, le procédé comporte les étapes suivantes :
- Génération et mémorisation d'une donnée de contrôle en association avec l'identifiant du terminal,
- Transmission, via la connexion établie, d'un message de contrôle à destination du premier terminal, le message comprenant au moins la donnée de contrôle générée,
- Réception en provenance d'un second terminal, d'un message de confirmation comprenant ladite donnée de contrôle et un identifiant du second terminal,
- Détermination que l'identifiant du second terminal est un identifiant d'un terminal de confiance, et
Lorsque le second terminal est déterminé être un terminal de confiance :
- Configuration de paramètres personnalisés pour l'accès au serveur par le premier terminal et transmission des paramètres personnalisés au premier terminal.

Le terminal à configurer se connecte au serveur en utilisant une configuration par défaut, partagée par une pluralité de terminaux du même type. La configuration initiale des terminaux à configurer étant identique, le serveur ne peut s'assurer qu'un terminal qui se connecte est légitime pour recevoir une configuration personnalisée. Le procédé surmonte ce problème en transmettant au terminal, par l'intermédiaire d'une première connexion initiée par le terminal, une donnée de contrôle. Lorsque le serveur reçoit la donnée de contrôle par l'intermédiaire d'un second réseau de communication, et que cette donnée provient d'un terminal déterminé comme étant un terminal de confiance, la légitimité du terminal à recevoir ne configuration est validée. Le serveur peut alors déterminer et transmettre des paramètres de configuration personnalisés au terminal.

L'identifiant du terminal est en outre un identifiant comprenant un numéro de port de communication sur le serveur, ou un identifiant à partir duquel il est possible de dériver un numéro de de port de communication. L'identifiant étant transmis dans un message d'établissement de connexion, le serveur peut obtenir le numéro de port demandé par le terminal avant d'accepter d'établir la connexion. Le serveur peut ainsi refuser d'établir une connexion lorsque le numéro de port de communication dérivé à partir de l'identifiant du terminal est déjà attribué à un autre terminal en cours de configuration.

La combinaison de ces deux caractéristiques permet au serveur de retrouver sans ambiguïté une connexion associée à une donnée de contrôle reçue. En effet, une telle disposition permet de garantir qu'une seule connexion entre un terminal dont la configuration n'est pas personnalisée et le serveur peut être établie à un instant donné.

Selon une réalisation particulière, le procédé est tel que l'étape de configuration et de transmission de paramètres d'accès personnalisés pour l'accès au serveur par le premier terminal comprend les sous-étapes suivantes :
- Obtention d'un identifiant de terminal mémorisé en association avec la donnée de contrôle,
- Génération et transmission d'un second identifiant du terminal vers le terminal correspondant à l'identifiant obtenu, le second identifiant comprenant un numéro de port de communication distinct du numéro de port de communication dérivé du premier identifiant,
- Réception en provenance du terminal d'une clef d'authentification générée par le terminal en réponse à la réception du second identifiant, et
- Association de ladite clef publique reçue avec au moins autorisation d'accès au serveur.

Ainsi, lorsque la légitimité du terminal à obtenir une configuration personnalisée est validée, le serveur attribue un nouvel identifiant au terminal. Ce nouvel identifiant étant distinct du premier identifiant le terminal, le serveur peut accepter les future connexions en provenance de ce terminal sans qu'il soit nécessaire d'en vérifier la légitimité par l'envoi d'une donnée de contrôle. D'autre part, le nouvel identifiant attribué comprend un numéro de port de communication distinct du numéro de port compris ou dérivé à partir du premier identifiant. De cette façon, le terminal peut se connecter même si un autre terminal est connecté avec le premier identifiant pour obtenir une configuration personnalisée.

En réponse à la transmission par le serveur du nouvel identifiant du terminal, le terminal transmet au serveur une clef d'authentification, par exemple une clef publique générée par le terminal. Le serveur peut alors associer des droits d'accès à la clef d'authentification afin d'autoriser des connexions futures en provenance du terminal.

Selon un mode particulier de réalisation, le procédé est tel que l'établissement, à l'initiative du premier terminal, d'une connexion entre le premier terminal et le serveur comprend les étapes suivantes :
- Réception d'une commande d'établissement d'une première connexion sécurisée en provenance du premier terminal, dite connexion porteuse, la commande comprenant un identifiant du premier terminal,
- Dérivation d'un numéro de port de communication à partir de l'identifiant du terminal reçu,
- Etablissement d'une seconde connexion sécurisée entre le serveur et le premier terminal, la seconde connexion étant portée par la première connexion et configurée pour rediriger vers le terminal des connexions entrantes sur ledit numéro de port de communication dérivé.

Une première connexion est établie à l'initiative du terminal en utilisant un identifiant et une clef d'authentification par défaut compris dans sa configuration initiale. Le fait que la connexion soit initiée par le terminal permet d'établir une connexion avec le serveur sans qu'elle soit bloquée par un pare-feu en sortie du réseau auquel appartient le terminal. Le serveur établit ensuite une nouvelle connexion portée par la première connexion. Cette nouvelle connexion étant portée par la première connexion, elle peut être établie par le serveur sans être bloqué par un pare-feu protégeant le réseau du terminal.

Les connexions entrant sur le port de communication du serveur dérivé de l'identifiant du terminal étant redirigée vers le terminal, le procédé permet l'accès au terminal depuis un poste de travail distant sans que l'accès soit bloqué par un pare-feu protégeant le réseau du terminal.

Selon une réalisation particulière, le procédé est tel que l'établissement d'une connexion en provenance du premier terminal est refusé lorsqu'une connexion est déjà établie avec un terminal possédant le même identifiant de terminal que le premier terminal.

Une telle disposition permet d'assurer qu'un seul terminal peut recevoir une configuration à un instant donné. Les terminaux étant initialement identique, le fait d'autoriser une seule configuration à un instant donné permet de garantir qu'une configuration personnalisée sera distribuée uniquement à un terminal autorisé.

Selon un autre aspect, et de façon correspondante au procédé de distribution d'une configuration, l'invention concerne aussi un procédé de réception par un terminal d'une configuration distribuée par un serveur, le terminal étant connecté à un premier réseau de communication, le procédé comprenant l'établissement à l'initiative du terminal, d'une connexion entre le terminal et le serveur, la connexion étant configurée pour rediriger vers le terminal des demandes de connexions reçues par le serveur sur un port de communication. Un tel procédé est remarquable en ce que le numéro du port de communication est dérivé à partir d'un identifiant du terminal transmit par le terminal dans un message d'établissement de la connexion, et en ce que, lorsque l'identifiant du terminal est un identifiant associé à une pluralité de terminaux, le procédé comporte les étapes suivantes :
- réception en provenance du serveur, d'un message de contrôle comprenant au moins une donnée de contrôle générée par le serveur,
- transmission de ladite donnée de contrôle à un second terminal, ledit second terminal étant configuré pour transmettre la donnée de contrôle et un identifiant du second terminal au serveur par l'intermédiaire d'un réseau d'accès distinct du premier réseau de communication, et
- réception de paramètres de configuration personnalisés en provenance du serveur, et configuration du terminal à partir des paramètres reçus.

Le procédé de réception d'une configuration permet ainsi à un terminal disposant d'une configuration non personnalisée de recevoir une configuration personnalisée de manière sécurisée. En proposant de transmettre un numéro de port de communication dans un identifiant du terminal, le procédé permet de communiquer au serveur ce numéro de port de communication sans qu'une connexion soit établie. Le serveur peut ainsi décider de refuser d'établir la connexion si un autre terminal est déjà en cours de configuration. La transmission de la donnée de contrôle à un terminal réputé être un terminal de confiance permet au serveur d'identifier le terminal parmi une pluralité de terminaux disposant d'une même configuration.

La combinaison de ces deux caractéristiques permet au serveur de retrouver sans ambiguïté une connexion associée à une donnée de contrôle reçue. En effet, une telle disposition permet de garantir qu'une seule connexion entre un terminal dont la configuration n'est pas personnalisée et le serveur peut être établie à un instant donné et permet au serveur de déterminer le terminal auquel se rapporte la donnée de contrôle reçue par l'intermédiaire du terminal de confiance.

Selon un mode particulier de réalisation, le procédé est tel que l'étape de réception de paramètres et de configuration du terminal comprend les sous-étapes suivantes :
- Réception d'un second identifiant du terminal en provenance du serveur,
- Génération d'un au moins une clef d'authentification associée au second identifiant,
- Transmission de la au moins une clef générée au serveur, et
- Mémorisation du second identifiant du terminal et de la au moins une clef d'authentification générée.

Lorsqu'un identifiant personnalisé est reçu par le terminal en provenance du serveur de distribution d'une configuration, une clef d'authentification est générée. Il s'agit par exemple d'un mot de passe ou d'un couple de clefs privée/publique. Dans ce cas, seule la clef publique est transmise au serveur, la clef privée restant connue uniquement du terminal. Le nouvel identifiant et la clef sont mémorisés par le terminal de façon à ce que le terminal puisse les utiliser lors des connexions ultérieures.

Selon une réalisation particulière, le procédé de réception d'une configuration est tel que l'étape d'établissement d'une connexion entre le terminal et le serveur comprend les sous-étapes suivantes :
- envoi d'une commande d'établissement d'une première connexion sécurisée vers le serveur, dite connexion porteuse, la commande comprenant un premier identifiant du dispositif obtenu à partir d'une configuration initiale du dispositif, l'identifiant du dispositif comprenant un numéro de port, et
- réception au travers de la connexion porteuse établie avec le serveur, d'une commande d'établissement d'une seconde connexion sécurisée, la connexion étant configurée par le serveur pour rediriger vers le dispositif des connexions entrantes sur ledit numéro de port du serveur vers le dispositif au travers de la connexion portée.

Le procédé permet ainsi d'accéder au terminal depuis un poste de travail extérieur au réseau auquel appartient le terminal, même si ce réseau est protégé par un pare-feu. Pour cela, une première connexion est établie à l'initiative du terminal, un tel établissement de connexion étant autorisé par un pare-feu. Le serveur établi à ensuite une seconde connexion vers le terminal, cette seconde connexion étant portée par la première connexion. Un port de communication étant configuré pour rediriger les connexions entrantes sur ce port vers le terminal, l'établissement de connexions vers ce terminal sont possibles.

Dans un mode particulier de réalisation, le procédé de réception d'une configuration est tel que tel qu'il comprend en outre, sur détection d'un refus d'établissement de la première connexion, le déclenchement d'un compteur à rebours à l'expiration duquel une nouvelle tentative de connexion est effectuée.

Le procédé permet ainsi au terminal de renouveler une tentative de connexion à intervalle régulier jusqu'à ce que le serveur soit disponible pour prendre en charge la configuration du terminal.

Selon un mode de réalisation particulier, le procédé de réception d'une configuration est tel que qu'une nouvelle tentative de connexion suite à un refus d'établissement de connexion par le serveur comprend la transmission d'un message d'établissement de connexion comprenant un identifiant du terminal, l'identifiant comprenant un numéro de port distinct du numéro de port compris dans le premier identifiant du dispositif.

Le terminal dispose dans sa configuration initiale d'au moins deux ports de communications qu'il peut sélectionner pour construire un identifiant. De cette façon, en cas de refus de connexion par le serveur, par exemple parce qu'un premier terminal ayant utilisé un premier port de communication dans son identifiant est en cours de configuration, le terminal peut générer un nouvel identifiant comprenant un second port de communication distinct du premier port de communication utilisé lors de la première tentative infructueuse.

Selon un mode particulier de réalisation, le procédé de réception d'une configuration est tel que l'étape de transmission de la donnée de contrôle à un terminal distinct du dispositif comprend une étape d'affichage de la donnée de contrôle sur un écran du dispositif.

La donnée de contrôle reçue est affichée sur un écran du terminal de façon à être transmise à un second terminal réputé être un terminal de confiance. Par exemple, la donnée de contrôle peut être affichée sous forme alphanumérique afin d'être recopiée par un utilisateur sur le second terminal. Elle peut aussi être affichée sous la forme d'un code barre ou d'un code graphique à deux dimensions afin d'être décodée à partir d'un lecteur adapté sur le second terminal. De cette façon, la donnée de contrôle peut être transmise à un terminal qui ne fait pas partie du réseau auquel appartient le terminal.

Selon un autre aspect, l'invention concerne aussi un dispositif de distribution d'une configuration vers au moins un premier terminal, le dispositif comprenant des moyens d'établissement d'une connexion avec un premier terminal à l'initiative dudit premier terminal, la connexion étant configurée pour rediriger vers le premier terminal des demandes de connexions reçues par le serveur sur un port de communication, le dispositif étant tel qu'il comporte :
- des moyens pour dériver un numéro dudit port de communication à partir d'un identifiant du premier terminal reçu dans un message d'établissement de la connexion,
- des moyens pour vérifier que l'identifiant du premier terminal est un identifiant correspondant à une configuration initiale du terminal,
- des moyens de génération et mémorisation d'une donnée de contrôle en association avec l'identifiant du terminal,
- un module de communication adapté pour transmettre, via la connexion établie, un message de contrôle à destination du premier terminal, le message comprenant au moins la donnée de contrôle générée,
- le module de communication étant en outre adapté pour recevoir, en provenance d'un second terminal, un message de confirmation comprenant ladite donnée de contrôle et un identifiant du second terminal,
- des moyens de détermination que l'identifiant du second terminal est un identifiant d'un terminal de confiance, et
Lorsque le second terminal est déterminé être un terminal de confiance :
- un module de configuration adapté pour configurer des paramètres personnalisés pour l'accès au serveur par le premier terminal, et transmettre des paramètres personnalisés au premier terminal.

De façon correspondante, l'invention se rapport aussi à un dispositif configurable par un serveur, le dispositif étant connecté à un premier réseau de communication et comprenant des moyens de communication adaptés pour établir une connexion vers le serveur, la connexion étant configurée pour rediriger vers le dispositif des demandes de connexions reçues par le serveur sur un port de communication, le dispositif étant tel que les moyens de communication sont en outre configurés pour:
- transmettre dans un message d'établissement de la connexion, un identifiant du dispositif comprenant ledit numéro de port de communication,
- recevoir en provenance du serveur, un message de contrôle comprenant au moins une donnée de contrôle générée par le serveur,
- transmettre vers un second terminal ladite donnée de contrôle, ledit second terminal étant configuré pour transmettre la donnée de contrôle et un identifiant du second terminal au serveur par l'intermédiaire d'un réseau d'accès distinct du premier réseau de communication, et

- recevoir des paramètres de configuration personnalisés en provenance du serveur, et
Le dispositif comprenant en outre des moyens de mise à jour de sa configuration à partir des paramètres reçus.

L'invention se rapporte encore à un serveur comportant un dispositif de distribution d'une configuration tel que décrit ci-dessus et à un terminal comportant un dispositif de réception d'une configuration tel que décrit ci-dessus.

Les dispositifs, serveur et terminaux décrits précédemment présentent au moins des avantages analogues à ceux des procédés auxquels ils se rapportent.

Dans un mode particulier de réalisation, les différentes étapes des procédés de distribution d'une configuration et de réception d'une configuration sont déterminées par des instructions de programmes d'ordinateurs.

En conséquence, l'invention vise aussi un programme d'ordinateur comportant des instructions adaptées à la mise en œuvre des étapes du procédé de distribution d'une configuration et/ou des instructions adaptées à la mise en œuvre des étapes du procédé de réception d'une configuration tels que décrits ci-dessus, lorsque le programme est exécuté par un processeur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement lisible par un processeur sur lequel est enregistré un programme d'ordinateur comportant des instructions adaptées à la mise en œuvre des étapes du procédé de distribution d'une configuration et/ou des instructions adaptées à la mise en œuvre des étapes du procédé de réception d'une configuration tels que décrits ci-dessus, lorsque le programme est exécuté par un processeur.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, une mémoire flash, ou encore un moyen d'enregistrement magnétique, par exemple une disquette ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Les différents modes ou caractéristiques de réalisation précités peuvent être ajoutés indépendamment ou en combinaison les uns avec les autres, aux étapes des procédés de distribution et de réception d'une configuration.

### Brève description des figures

D'autres caractéristiques et avantages des procédés apparaîtront plus clairement à la lecture de la description suivante d'un mode de réalisation particulier, donné à titre de simple exemple illustratif et non limitatif, et des dessins annexés, parmi lesquels :
- La figure 1 représente une architecture adaptée pour mettre en œuvre les procédés de configuration et de distribution de configuration selon un mode particulier de réalisation,
- La figure 2 illustre les principales étapes du procédé de réception d'une configuration,
- La figure 3 illustre les principales étapes du procédé de distribution d'une configuration,
- La figure 4 représente l'architecture d'u dispositif adapté pour mettre en œuvre le procédé de configuration, et
- La figure 5 représente l'architecture d'un dispositif adapté pour mettre en œuvre le procédé de distribution d'une configuration.

### Description détaillée

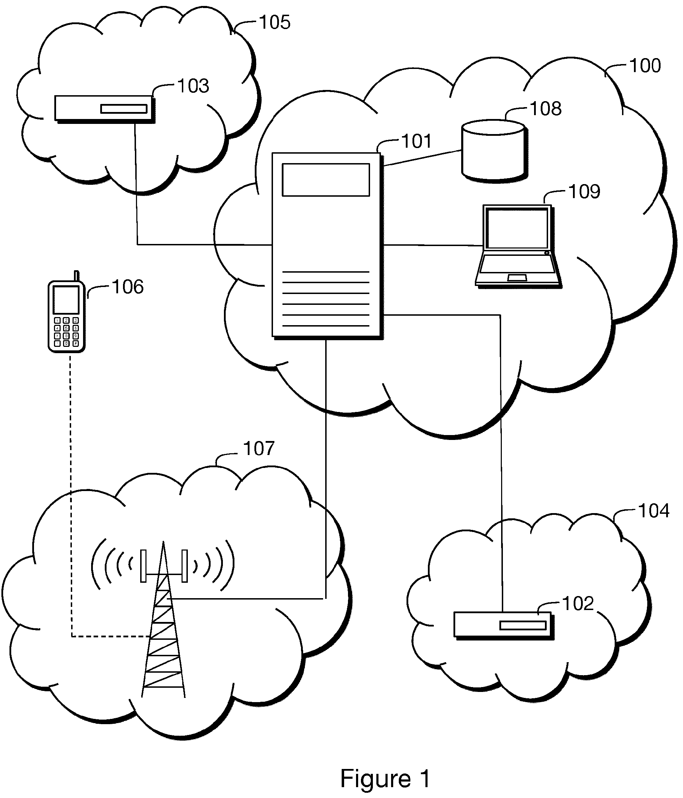

La figure 1 montre un réseau de télécommunication 100 comprenant un serveur 101 pouvant communiquer avec une base de données 108 et un terminal 109, par exemple un ordinateur portable.

La figure montre également deux équipements 102 et 103 appartenant respectivement à des réseaux 104 et 105. Les équipements 102 et 103 représentés sont des sondes installées dans les réseaux locaux d'entreprises 104 et 105. Ces réseaux disposent d'un plan d'adressage privé et sont reliés au réseau 100 par des passerelles d'interconnexion non représentées sur la figure. Une passerelle d'interconnexion est notamment connue pour réaliser une fonction NAT (Network Address Translation) et/ou une fonction de pare-feu. De ce fait, les connexions entre la sonde 103 avec le serveur 101 ou l'ordinateur 109 ne peuvent être établies qu'à l'initiative de la sonde 103, les connexions à la sonde 103 depuis le serveur 101 ou l'ordinateur 109 étant bloquées par la passerelle.

La figure montre aussi réseau d'accès cellulaire 107 interconnecté avec le réseau 100 ainsi qu'un terminal mobile 106 connecté au réseau d'accès 107. Le téléphone 106 peut être un smartphone, une tablette ou tout autre appareil distinct des sondes 102 et 103 et adapté pour établir des communications avec un équipement du réseau 100 par l'intermédiaire d'un réseau tel que le réseau d'accès cellulaire 107. Le terminal 106 peut notamment transmettre des messages au serveur 101, directement ou par l'intermédiaire d'autres équipements techniques non représentés.

Le terminal 106 est un terminal de confiance dont le numéro d'appel est enregistré dans la base de données 108. De cette façon, lorsqu'un message en provenance du réseau d'accès 107 est reçu par le serveur 101, le serveur 101 obtient un identifiant du terminal appelant à partir du message et peut consulter la base de données 108 pour déterminer si le message provient d'un terminal de confiance ou non. De cette façon, le serveur peut de conditionner l'exécution de certaines actions suite à la réception d'un message en provenance du réseau 107 au fait que le message provient d'un terminal de confiance.

Les sondes 102 et 103 comprennent une interface de communication leur permettant d'échanger des messages avec d'autres équipements. Il s'agit par exemple d'une interface réseau Ethernet ou Wi-Fi. Cette première interface réseau permet aux équipements 102 et 103 d'établir des connexions avec le serveur 101.

Dans leur état initial, les sondes 102 et 103 disposent d'une configuration identique. La configuration d'une sonde comprend au moins :
- un identifiant de la sonde,
- une adresse permettant d'établir des connexions vers le serveur 101,
- un compte utilisateur U1, et
- un couple clef publique KPU1 / clef privée (KPR1) associé au compte utilisateur, et
- une clef publique KPU2associée à des autorisations d'accès à un compte U2 sur le serveur 101, l'identifiant du compte U2 du serveur étant dérivable de l'identifiant de la sonde (par exemple, le nom d'utilisateur du compte U2 sur le serveur est identique à l'identifiant de la sonde).

Des droits de connexion à distance au compte utilisateur sont associés à la clef publique. Ainsi par exemple, la clef KPR1 permet une connexion de type SSH (Secure Shell) au compte U1 initialement configurés dans les sondes 102 et 103.

Les sondes 102 et 103 peuvent ainsi établir des connexions sécurisées avec le serveur 101, en utilisant le compte U2 et la clef KPU2.

Bien entendu, une telle architecture peut comprendre plus de deux dispositifs 102 et 103, qui partagent alors initialement la même configuration.

Lorsqu'une sonde 102 et 103 est installée dans un réseau d'entreprise, la configuration initiale de la sonde doit être personnalisée afin de garantir la sécurité. En effet, toutes les sondes étant préconfigurées de manière identique en sortie d'usine, des personnes mal intentionnées pourraient utiliser la configuration d'une sonde pour accéder sans autorisation à une autre sonde identique.

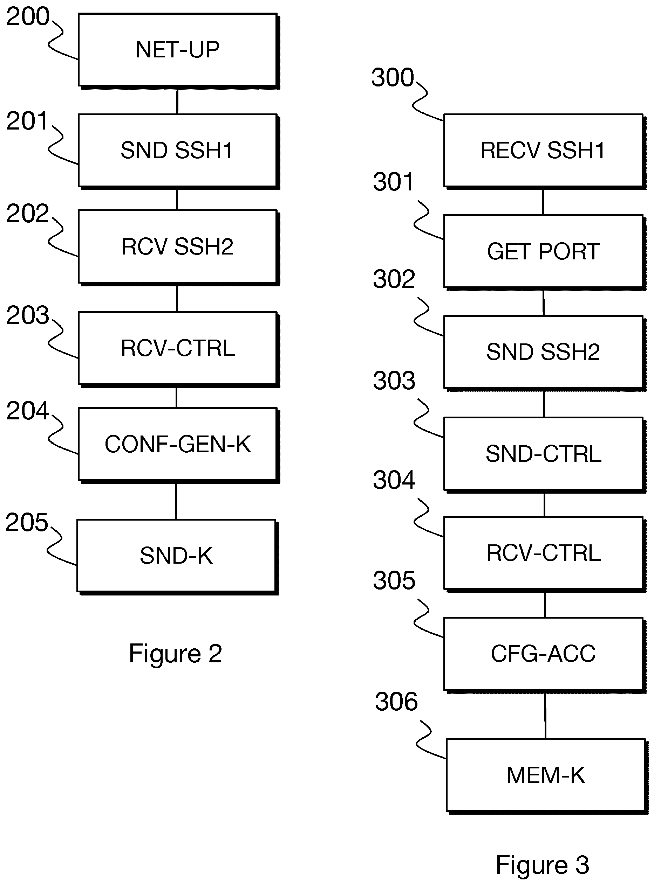

Les étapes des procédés de distribution configuration et de configuration vont maintenant être décrites en relation avec les figures 1, 2 et 3.

Lors d'une première étape 200, la sonde 102 détecte une connexion réseau. La sonde 102 peut détecter qu'une connexion à un réseau est possible lorsqu'elle reçoit, par l'intermédiaire de son interface réseau, une adresses IP et/ou une adresse de passerelle par défaut valides sur le réseau 104.

Lorsqu'une connexion valide est détectée, la sonde 102 consulte sa configuration initiale pour déterminer l'adresse du serveur 101. La configuration peut être mémorisée dans une mémoire persistante de la sonde, comme par exemple dans une ROM (Read Only Memory), une mémoire flash ou encore un disque dur. Les données de configuration sont par exemple mémorisées sous la forme d'un fichier structuré ou d'une base de données. L'adresse du serveur est par exemple une URL (Uniform Resource Locator) ou une adresse IP.

A l'étape 201, la sonde envoie un message d'établissement de connexion sécurisée SSH1 à destination du serveur 101. Le message comprend notamment un identifiant de compte utilisateur U2 sur le serveur 101 et la clef publique KPU2 associée. Dans cet exemple, le compte utilisateur ID1 est identique à l'identifiant de la sonde 102. Cette connexion est dite connexion « porteuse ».

Selon une réalisation particulière, l'identifiant de compte utilisateur est dérivé à partir de l'identifiant de la sonde. Par exemple, l'identifiant de compte utilisateur U2 peut correspondre à l'identifiant de la sonde auquel sont soustraits ou ajoutés des caractères alphanumériques. Par exemple, si l'identifiant initial de la sonde 102 est « newprobe », le compte utilisateur U2 sur le serveur peut être dérivé en concaténant 4 chiffres, pour donner par exemple « newprobe9990 ». Dans un tel cas, les chiffres ajoutés peuvent correspondre à un numéro de port. Ce numéro de port est par exemple un numéro de port compris dans la configuration initiale de la sonde, ou un numéro de port issu d'une plage de numéro de ports compris dans la configuration initiale de la sonde 102.

Le serveur 101 reçoit la demande de connexion SSH1 à l'étape 300. Lors de l'étape 300, le serveur 101 obtient les autorisations d'accès au compte utilisateur U2 selon la clef publique KPU2 reçue dans la demande de connexion et accepte l'établissement de la connexion si les autorisations sont valides.

A l'étape 301, le serveur dérive un numéro de port à partir de l'identifiant de compte utilisateur auquel la demande de connexion sécurisée fait référence. Par exemple, si le compte utilisateur U2 auquel la demande de connexion SSH se réfère est « newprobe9990 », le serveur 101 dérive le numéro de port « 9990 » à partir des 4 derniers caractères de l'identifiant.

A l'étape 302, le serveur 101 se met en écoute sur le numéro de port dérivé à l'étape 301 et émet une demande d'établissement de connexion sécurisée SSH2 « portée » par la connexion « porteuse établie » à l'étape 300. Cette demande de connexion comprend un identifiant de compte utilisateur U1 initialement configuré sur la sonde 102 et une clef publique KPU1 associée à ce compte sur la sonde. L'identifiant de compte U1 et la clef publique PKU1 associée sont partagés par toutes les sondes dans leur configuration initiale et sont renseignés dans le serveur 101 par une configuration initiale. La connexion SSH2 demandée est en outre configurée par le serveur pour que les connexions entrantes sur le port sur lequel le serveur s'est mis sur écoute (dérivé de l'identifiant de compte U2) soient redirigées vers la connexion « portée ».

Bien que la passerelle protégeant le réseau 104 interdise les connexions entrantes, le serveur 101 peut établir une connexion vers la sonde 102 au travers de la connexion porteuse, car la connexion « porteuse », au travers de laquelle est établie la connexion « portée » a été établie au préalable depuis la sonde 102 vers le serveur 101, c'est-à-dire dans une direction autorisée par la passerelle.

Dès lors que les connexions porteuses et portées sont établies entre la sonde 102 et le serveur 101, un opérateur peut accéder à la sonde 102 à partir de l'ordinateur 109, sans que la connexion lui soit refusée par une passerelle en entrée du réseau 104.

Selon une réalisation particulière, le serveur 101 vérifie à l'étape 301 que le port dérivé n'est pas déjà configuré pour rediriger les connexions entrantes vers une autre sonde en cours de configuration. Par exemple, si la sonde103 tente de se connecter au serveur 101 alors que la sonde 102 a déjà établi une connexion porteuse avec le serveur 101, le serveur refuse la connexion. Le dispositif 103 peut tenter une nouvelle connexion après un délai d'attente, par exemple après une minute, jusqu'à ce que la sonde 102 ait libéré la connexion.

Selon un mode particulier de réalisation, lorsque l'établissement d'une connexion porteuse est refusée par le serveur parce que le port dérivé à partir de l'identifiant de compte utilisateur est déjà associé à une autre connexion porteuse pour configurer une autre sonde, c'est-à-dire parce qu'une sonde est connectée avec sa configuration initiale, la sonde 102 génère un nouvel identifiant de compte utilisateur U2 à partir d'un nouveau numéro de port sélectionné dans une plage de ports comprise dans sa configuration initiale. Par exemple, suite à l'échec d'une connexion avec un identifiant de compte utilisateur « probe9990 », une sonde peut tenter une nouvelle connexion avec un identifiant de compte « probe9991 ».

La sonde 102 reçoit à l'étape 202 la demande de connexion « portée » émise par le serveur 101. La sonde 102 vérifie la validité de la demande de connexion à partir de la clef publique KPU1 comprise dans la demande de connexion et accepte la connexion lorsque la clef publique KPU1 autorise la connexion.

A l'étape 303, le serveur 101 utilise la connexion portée pour envoyer un message de contrôle 301 à destination de la sonde 102. Le message de contrôle comprend par exemple un code. Le code peut être une séquence de chiffres et/ou de caractères générée par le serveur. Le code est généré par le serveur de manière à en garantir l'unicité. De cette façon, le serveur ne peut pas générer deux codes identiques. Pour cela, le code peut par exemple comprendre un élément dont la valeur est déterminée par une horloge. Le code généré est mémorisé par le serveur dans la base de données 108 en association avec l'identifiant de la sonde, le numéro de port associé à la connexion portée ou à l'identifiant du compte utilisateur avec lequel la sonde a établi la connexion « porteuse ».

Lors d'une étape 203, la sonde 102 reçoit le code généré et transmis par le serveur via la connexion « portée » et retransmet le code reçu au serveur 101 dans un message de confirmation envoyé par un terminal connu du serveur 101 pour être un terminal de confiance.

Dans une réalisation particulière, la sonde 102 transmet le code au terminal 106 dont l'identifiant d'appel est mémorisé dans la base de données 108 du serveur comme étant un terminal de confiance. Pour transmettre le code, la sonde peut afficher le code sur un écran de la sonde, par exemple sous la forme d'un code graphique à deux dimensions, tel qu'un code barre ou un QRCode. Avantageusement, le code graphique comprend, outre le code transmis par le serveur, une l'adresse du serveur 101 disponible dans la configuration initiale de la sonde. Le code à deux dimensions peut être configuré pour déclencher une connexion vers le serveur 101 et passer en paramètre le code reçu. Par exemple, le code graphique affiché correspond à une URL du type :
« http://www.configserveur.com/confirm.html?code=123456 ».

La lecture du code graphique à deux dimensions par le terminal 106 provoque alors une connexion au serveur pour transmettre le code.

En variante, le code peut être affiché sous forme alphanumérique pour recopié sur le terminal 106 par un utilisateur et transmis au serveur 101 par SMS (Short Message Service) ou par une communication vocale avec un serveur vocal interactif via une séquence DTMF ou vocalement via un opérateur, ou par tout autre moyen permettant au serveur d'identifier le message contenant le code comme provenant d'un terminal de confiance.

Le serveur reçoit le message de confirmation comprenant le code à l'étape 304 au cours de laquelle sont vérifiés la validité du code et l'identifiant du terminal émetteur du message. Le serveur obtient par exemple l'identifiant de l'émetteur du message dans un entête du message. Il peut s'agir d'un champ « from » d'un message SIP (Session Initiation Protocol) ou d'un champ d'un message de signalisation comportant un identifiant d'un terminal appelant ou encore d'une adresse mail d'expéditeur lorsque le code est transmis par courrier électronique.

Lorsque le code reçu par le serveur est valide et que l'expéditeur du message comportant le code est correspond à un terminal de confiance, le serveur 101 obtient l'identifiant de la sonde pour laquelle a été généré le code. L'identifiant est par exemple obtenu par une requête à la base de données 108 dans laquelle le code a été mémorisé en association avec l'identifiant de la sonde lors de l'étape 303.

A l'étape 305, le serveur 101 génère un identifiant personnalisé et unique U3 pour la sonde 102 et transmet cet identifiant à la sonde 102 par l'intermédiaire de la connexion « portée ». Cet identifiant comprend en particulier un numéro de port qui sera attribué à la sonde 102 lors de ses connexions ultérieures. Par exemple, le serveur génère un identifiant tel que « probe6050 », les 4 derniers chiffres correspondant au port 6050 sur le serveur et crée un compte utilisateur U3 dont l'identifiant est l'identifiant personnalisé généré.

La sonde reçoit l'identifiant personnalisé à l'étape 204 et génère un couple de clefs asymétriques comprenant une clef privée KPR3 et une clef publique KPU3. Le couple de clefs asymétriques généré est mémorisé dans la configuration de la sonde en remplacement de l'identifiant de la configuration initiale et des clefs KPR2 et KPU2. La clef publique générée est alors transmise au serveur lors d'une étape 205.

A l'étape 306, le serveur reçoit la clef publique KPU3 générée et transmise par la sonde 102 et la mémorise en association avec l'identifiant de la sonde généré à l'étape 305, et configure des droits d'accès au compte U3 pour les connexions utilisant la clef KPU3..

Selon un mode particulier de réalisation, le couple clef privée KPR3 / clef publique KPU3 est généré par le serveur 101 et transmis à la sonde avec son identifiant personnalisé lors de l'étape 305. Le serveur efface ensuite la clef privée dont seule la sonde 102 a l'usage. Une telle disposition décharge la sonde de la responsabilité de créer le couple de clef.

A l'étape 207, la sonde termine la connexion « porteuse » et la connexion « portée ».

La configuration de sonde 102 a ainsi pu être personnalisée de manière sécurisée, sans qu'il soit nécessaire qu'un opérateur intervienne physiquement sur la sonde.

Par la suite, lorsque la sonde 102 détecte une connexion réseau, elle établit une première connexion sécurisée « porteuse » vers le serveur 101 en utilisant son identifiant personnalisé U3 et la clef publique associée KPU3. A l'établissement de cette première connexion, le serveur établi une seconde connexion sécurisée « portée » par l'intermédiaire de la première connexion et se met en écoute sur le port dérivé de l'identifiant U3 afin de rediriger les connexions arrivant sur ce port vers la connexion portée afin qu'elles puissent atteindre la sonde 102.

Le procédé permet ainsi à un opérateur d'accéder de façon simple et sécurisée à une sonde installée dans un réseau privé protégé par un pare-feu.

Bien que la description qui précède ait été faite en référence à la configuration d'une sonde, les procédés de configuration et de distribution d'une configuration peuvent s'appliquer à tout type de dispositif nécessitant une personnalisation de sa configuration. Par exemple, les procédés peuvent s'appliquer à un objet connecté, un ordinateur ou encore un routeur.

De même, bien que la description qui précède fasse référence à des connexions sécurisées de type SSH, les procédés de configuration et de distribution d'une configuration peuvent utiliser d'autre type de configuration sécurisée, comme par exemple SSL.

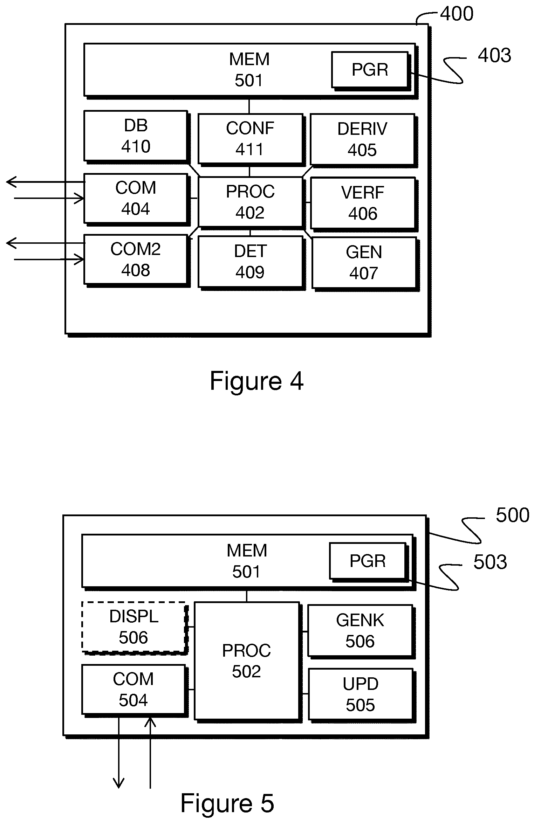

La figure 4 illustre l'architecture d'un dispositif 400 adapté pour mettre en œuvre le procédé de distribution d'une configuration selon un mode particulier de réalisation de l'invention.

Le dispositif 400 comprend un module de traitement de données comprenant un espace de stockage 401, par exemple une mémoire (MEM), une unité de traitement 402, équipée par exemple d'un microprocesseur (PROC), et pilotée par le programme d'ordinateur (PGR) 403 mettant en œuvre le procédé de distribution tel que décrit précédemment.

A l'initialisation, les instructions de code du programme d'ordinateur 403 sont par exemple chargées en mémoire avant d'être exécutées par le processeur de l'unité de traitement 402. Le microprocesseur de l'unité de traitement 402 met en œuvre, selon les instructions du programme d'ordinateur 403, les étapes du procédé de distribution d'une configuration, et notamment les étapes de dérivation d'un numéro de port de communication à partir à partir d'un identifiant d'un premier terminal reçu dans un message d'établissement de connexion, de génération et mémorisation d'une donnée de contrôle en association avec l'identifiant du terminal, de transmission, via la connexion établie, d'un message de contrôle à destination du premier terminal, le message comprenant au moins la donnée de contrôle générée, de réception en provenance d'un second terminal, d'un message de confirmation comprenant ladite donnée de contrôle et un identifiant du second terminal, de détermination que l'identifiant du second terminal est un identifiant d'un terminal de confiance, et lorsque le second terminal est déterminé être un terminal de confiance, de configuration de paramètres personnalisés pour l'accès au serveur par le premier terminal et transmission des paramètres personnalisés au premier terminal.

Le dispositif 400 comprend en outre des moyens de dérivation 405 d'un numéro port de communication à partir d'un identifiant du premier terminal reçu dans un message d'établissement de la connexion. De tels moyens correspondent par exemple à une mémoire comprenant des instructions de programme d'ordinateur destinées à être exécutées par une unité de traitement et configurées pour isoler, à partir d'un identifiant alphanumérique d'un terminal, des caractères correspondant à un numéro de port.

Le dispositif 400 comprend aussi des moyens de vérification 406 pour vérifier que l'identifiant du premier terminal est un identifiant partagé par une pluralité de terminaux. Pour cela, le dispositif peut comprendre un mémoire dans laquelle sont enregistrées des instructions de programme d'ordinateur destinées à être exécutées par une unité de traitement et configurées pour comparer au moins une partie d'un identifiant du terminal reçu avec une valeur préconfigurée. Par exemple, ces moyens de vérification sont configurés pour comparer l'identifiant du terminal reçu avec un nom d'utilisateur mémorisé au préalable sur le serveur, par exemple dans une base de données 410.

Le dispositif 400 comprend également des moyens de génération et mémorisation 407 d'une donnée de contrôle en association avec l'identifiant du terminal. De tels moyens sont par exemple mis en œuvre par un générateur pseudo-aléatoire configuré pour générer une séquence de caractères alphanumériques. Les moyens 400 comprennent en outre une mémoire, comme une mémoire flash, un disque magnétique, ou une base de données 410, adaptée pour mémoriser de façon persistante la donnée de contrôle ainsi généré, ainsi que qu'un identifiant du terminal associé.

Le dispositif comprend aussi un module de communication 404 (COM permettant au dispositif 400 de se connecter à un réseau de télécommunication, par exemple une interface réseau Ethernet, WiFi, ou encore une interface 2G, 3G ou 4G. L'interface de communication 404 est adaptée pour établir une communication avec un terminal et transmettre un message de contrôle comprenant au moins une donnée de contrôle générée par le module 407. Selon une réalisation particulière, le module de communication est adapté pour établir des connexions sécurisées avec un terminal, par exemple des communications SSH.

Le dispositif 400 comprend un second module de communication 408 adapté pour recevoir, en provenance d'un second terminal, un message de confirmation comprenant une donnée de contrôle et un identifiant d'un second terminal. Le module 408 correspond par exemple à une interface réseau Ethernet, WiFi, ou encore une interface 2G, 3G ou 4G.

Le dispositif 400 comprend aussi des moyens de détermination 409 que l'identifiant du second terminal est un identifiant d'un terminal de confiance. Pour cela, le dispositif peut comprendre un mémoire dans laquelle sont enregistrées des instructions de programme d'ordinateur destinées à être exécutées par une unité de traitement et configurées pour comparer au moins une partie d'un identifiant du terminal reçu en provenance du second terminal avec une valeur préconfigurée, par exemple une valeur mémorisée dans une base de données 410.

Le dispositif 400 comporte enfin un module de configuration 411 adapté pour déterminer des paramètres personnalisés pour l'accès à un serveur par le premier terminal, et transmettre des paramètres personnalisés au premier terminal, le module de configuration étant mis en œuvre lorsque le second terminal est déterminé être un terminal de confiance. Un tel module de configuration est par exemple mis en œuvre par un programme d'ordinateur comprenant des instructions enregistrées dans une mémoire, par exemple dans la mémoire 401, et configurées pour générer une séquence de caractères alphanumériques unique à laquelle est par exemple concaténé un numéro de port de communication sélectionné par le serveur dans une plage de numéros de ports de communication préconfigurée, et non encore utilisés pour générer un identifiant. Les instructions sont en outre configurées pour transmettre au terminal l'identifiant ainsi généré.

Selon un mode particulier de réalisation, le module de configuration 411 est en outre adapté pour générer une clef d'authentification associée à l'identifiant généré, et configurer des droits d'accès au serveur associés à la clef d'authentification. Par exemple, le module de configuration peut comprendre des instructions de programme d'ordinateur configurées pour exécuter un algorithme de génération de clefs asymétriques, mémoriser une clefs publique en association avec des droits d'accès et transmettre la clef privée, la clef publique et l'identifiant associé au terminal.

La figure 5 représente l'architecture d'un dispositif 500 adapté pour mettre en œuvre le procédé de réception d'une configuration, selon une réalisation particulière de l'invention.

Le dispositif 500 comprend un module de traitement de données comprenant un espace de stockage 501, par exemple une mémoire (MEM), une unité de traitement 502, équipée par exemple d'un microprocesseur (PROC), et pilotée par le programme d'ordinateur (PGR) 503 mettant en œuvre le procédé de réception d'une configuration tel que décrit précédemment.

A l'initialisation, les instructions de code du programme d'ordinateur 503 sont par exemple chargées en mémoire avant d'être exécutées par le processeur de l'unité de traitement 502. Le microprocesseur de l'unité de traitement 502 met en œuvre, selon les instructions du programme d'ordinateur 503, les étapes du procédé de réception d'une configuration, et notamment les étapes de réception en provenance d'un serveur, d'un message de contrôle comprenant au moins une donnée de contrôle générée par le serveur, de transmission de ladite donnée de contrôle à un second terminal, ledit second terminal étant configuré pour transmettre la donnée de contrôle et un identifiant du second terminal au serveur par l'intermédiaire d'un réseau d'accès distinct du premier réseau de communication, et de réception de paramètres de configuration personnalisés en provenance du serveur, et configuration du terminal à partir des paramètres reçus.

Le dispositif 500 comprend des moyens de communication 504 configurés pour transmettre dans un message d'établissement de connexion, un identifiant du dispositif comprenant un numéro de port de communication compris dans une configuration initiale du dispositif. Les moyens de communication 504 correspondent par exemple à une interface réseau Ethernet, Wifi, 2G, 3G ou 4G pilotée par des instructions de programme d'ordinateur enregistrée dans une mémoire du dispositif et exécutées par une unité de traitement. De telles instructions sont configurées pour obtenir un identifiant initial du dispositif et un numéro de port de communication, par exemple à partir d'un fichier de configuration enregistré dans une mémoire persistante du dispositif telle qu'un disque dur ou une mémoire flash, pour concaténer l'identifiant et le numéro de port obtenus pour générer un identifiant à partir duquel il est possible de dériver le numéro de port de communication, et pour transmettre un message comprenant l'identifiant ainsi formé à destination d'un serveur dont l'adresse est comprise dans le fichier de configuration initiale.

Les moyens de communication 504 sont en outre configurés pour recevoir en provenance du serveur, un message de contrôle comprenant au moins une donnée de contrôle générée par le serveur, pour transmettre vers un second terminal ladite donnée de contrôle, ledit second terminal étant configuré pour transmettre la donnée de contrôle et un identifiant du second terminal au serveur par l'intermédiaire d'un réseau d'accès distinct du premier réseau de communication, et pour recevoir des paramètres de configuration personnalisés en provenance du serveur.

Le dispositif 500 comprenant en outre des moyens 505 de mise à jour de sa configuration à partir des paramètres reçus. Ces moyens de mise à jour de la configuration sont par exemple mis en œuvre par des instructions de programme d'ordinateur enregistrées dans une mémoire telle que la mémoire 501 afin d'être exécutées par une unité de traitement telle que l'unité de traitement 502 du dispositif. Les instructions sont par exemple configurées pour obtenir un identifiant du dispositif personnalisé généré par le serveur, l'identifiant comprenant un numéro de port de communication.

Selon une réalisation particulière, le dispositif 500 comprend en outre des moyens 506 de génération d'une clef d'authentification. Par exemple, les moyens de configuration 506 correspondent à des instructions de programme d'ordinateur destinées à être exécutées par l'unité de traitement 502 et configurées pour générer une clef d'authentification, par exemple un couple de clefs RSA, mémoriser dans une mémoire du dispositif la ou les clefs générées, et transmettre au serveur par l'intermédiaire des moyens de communication 504 la clef publique générée de façon à ce que le serveur puisse associer des droits d'accès particuliers pour le terminal.

Selon un mode particulier de réalisation, le dispositif 500 comprend aussi un module d'affichage 507, comme par exemple un écran adapté pour afficher des informations, et en particulier pour afficher une donnée de contrôle reçue en provenance d'un serveur.

## Revendications

1. Procédé de distribution par un serveur d'une configuration destinée à au moins un premier terminal, le procédé comprenant l'établissement (300), à l'initiative d'un premier terminal, d'une connexion entre ledit premier terminal et le serveur, ladite connexion étant configurée pour rediriger vers ledit premier terminal au moins une demande de connexion reçue par le serveur sur un port de communication, le procédé étant **caractérisé en ce que** le port de communication est dérivé (301) à partir d'un premier identifiant dudit premier terminal reçu dans un message d'établissement de ladite connexion, et **en ce que**, lorsque ledit premier identifiant dudit premier terminal est un identifiant associé à une pluralité de terminaux, le procédé comporte les étapes suivantes :
- génération et mémorisation (303) d'une donnée de contrôle en association avec ledit premier identifiant dudit premier terminal,
- transmission (303), via ladite connexion établie, d'un message de contrôle à destination dudit premier terminal, le message comprenant au moins ladite donnée de contrôle générée,
- réception (304) en provenance d'un second terminal, d'un message de confirmation comprenant ladite donnée de contrôle et un identifiant dudit second terminal,
- détermination que l'identifiant dudit second terminal est un identifiant d'un terminal de confiance, et
lorsque ledit second terminal est déterminé être un terminal de confiance :
- obtention dudit premier identifiant dudit premier terminal mémorisé en association avec ladite donnée de contrôle reçue,
- génération et transmission d'un second identifiant dudit premier terminal vers ledit premier terminal, ledit second identifiant comprenant un numéro de port de communication distinct du numéro de port de communication dérivé dudit premier identifiant,
- réception en provenance dudit premier terminal d'une clef publique générée par ledit premier terminal en réponse à la réception du second identifiant, et
- association de ladite clef publique reçue avec au moins une autorisation d'accès audit serveur.

2. Procédé selon l'une quelconque des revendications précédentes dans lequel l'établissement, à l'initiative dudit premier terminal, d'une connexion entre ledit premier terminal et le serveur comprend les étapes suivantes :
- Réception d'une commande d'établissement d'une première connexion sécurisée en provenance dudit premier terminal, la commande comprenant ledit premier identifiant dudit premier terminal,
- Dérivation d'un numéro de port de communication à partir dudit premier l'identifiant dudit premier terminal reçu,
- Etablissement d'une seconde connexion sécurisée entre le serveur et ledit premier terminal au travers de ladite première connexion, et configurée pour rediriger vers ledit premier terminal des connexions entrantes sur ledit numéro de port de communication dérivé.

3. Procédé selon l'une quelconque des revendications 1 à 2 tel que l'établissement d'une connexion en provenance dudit premier terminal est refusé lorsqu'une connexion est déjà établie avec un terminal possédant le même identifiant de terminal que ledit premier terminal.

4. Procédé de réception par un premier terminal d'une configuration distribuée par un serveur, ledit premier terminal étant connecté à un premier réseau de communication, le procédé comprenant l'établissement à l'initiative dudit premier terminal, d'une première connexion entre ledit premier terminal et ledit serveur, ladite première connexion étant configurée pour établir une seconde connexion au travers de ladite première connexion depuis ledit serveur vers ledit premier terminal , le procédé étant **caractérisé en ce que** ledit premier terminal transmet dans un message d'établissement de ladite première connexion un identifiant dudit premier terminal, ledit identifiant comprenant un numéro de port de communication, et **en ce que**, lorsque l'identifiant dudit premier terminal est un identifiant associé à une pluralité de terminaux, le procédé comporte les étapes suivantes :
- réception (203), via ladite seconde connexion, en provenance dudit serveur, d'un message de contrôle comprenant au moins une donnée de contrôle générée par ledit serveur,
- transmission (203) de ladite donnée de contrôle à un second terminal,
- réception via ladite seconde connexion d'un second identifiant dudit premier terminal en provenance dudit serveur,
- génération d'au moins une clef publique associée au second identifiant,
- transmission via ladite seconde connexion de ladite au moins une clef générée audit serveur, et
- mémorisation du second identifiant dudit premier terminal et de ladite au moins une clef générée.

5. Procédé selon la revendication 4 dans lequel l'étape d'établissement de ladite première connexion entre ledit premier terminal et le serveur comprend les sous-étapes suivantes :
- envoi d'une commande d'établissement de ladite première connexion sécurisée vers le serveur, la commande comprenant un premier identifiant dudit premier terminal obtenu à partir d'une configuration initiale dudit premier terminal, ledit premier identifiant comprenant un numéro de port,
- réception au travers de ladite première connexion sécurisée établie avec le serveur, d'une commande d'établissement d'une seconde connexion sécurisée.

6. Procédé selon l'une quelconque des revendications 4 à 5 tel qu'il comprend en outre, sur détection d'un refus d'établissement de ladite première connexion, le déclenchement d'un compteur à rebours à l'expiration duquel une nouvelle tentative de connexion est effectuée.

7. Procédé selon la revendication 6 dans lequel la nouvelle tentative de connexion comprend la transmission d'un message d'établissement de ladite première connexion comprenant un identifiant dudit premier terminal, l'identifiant comprenant un numéro de port distinct du numéro de port compris dans ledit premier identifiant dudit premier terminal .

8. Procédé selon l'une quelconque des revendications 4 à 7 dans lequel l'étape de transmission de la donnée de contrôle à un terminal distinct dudit premier terminal comprend une étape d'affichage de ladite donnée de contrôle sur un écran dudit premier terminal.

9. Dispositif de distribution d'une configuration vers au moins un premier terminal, le dispositif comprenant des moyens d'établissement d'une connexion avec un premier terminal à l'initiative dudit premier terminal, ladite connexion étant configurée pour rediriger vers ledit premier terminal des demandes de connexions reçues par le dispositif sur un port de communication, le dispositif étant **caractérisé en ce qu'**il comporte :
- des moyens (405) pour dériver un numéro dudit port de communication à partir d'un premier identifiant dudit premier terminal reçu dans un message d'établissement de ladite connexion,
- des moyens (406) pour vérifier que ledit premier identifiant dudit premier terminal est un identifiant associé à une pluralité de terminaux,
- des moyens (407) de génération et mémorisation d'une donnée de contrôle en association avec ledit premier identifiant dudit premier terminal,
- un module de communication (404) adapté pour transmettre, via ladite connexion établie, un message de contrôle à destination dudit premier terminal, le message comprenant au moins ladite donnée de contrôle générée,
- le module de communication étant en outre adapté pour recevoir, en provenance d'un second terminal, un message de confirmation comprenant ladite donnée de contrôle et un identifiant du second terminal,
- des moyens (409) de détermination que ledit identifiant dudit second terminal est un identifiant d'un terminal de confiance,
- des moyens pour obtenir ledit premier identifiant dudit premier terminal mémorisé en association avec ladite donnée de contrôle reçue,
- des moyens de génération d'un second identifiant dudit premier terminal,
- des moyens de transmission, vers ledit premier terminal, dudit second identifiant comprenant un numéro de port de communication distinct du numéro de port de communication dérivé dudit premier identifiant,
- des moyens de réception, en provenance dudit premier terminal, d'une clef publique générée par ledit premier terminal en réponse à la réception du second identifiant,
- des moyens d'association de ladite clef publique reçue avec au moins une autorisation d'accès audit serveur.

10. Dispositif configurable par un serveur, le dispositif étant connecté à un premier réseau de communication et comprenant des moyens de communication (504) adaptés pour établir une première connexion vers ledit serveur, ladite première connexion étant configurée pour établir une seconde connexion au travers de ladite première connexion, depuis ledit serveur vers ledit dispositif, ledit dispositif étant **caractérisé en ce que** les moyens de communication sont en outre configurés pour:
- transmettre dans un message d'établissement de la connexion, un premier identifiant dudit dispositif, ledit premier identifiant comprenant un numéro de port de communication,
- recevoir en provenance du serveur, via ladite seconde connexion, un message de contrôle comprenant au moins une donnée de contrôle générée par ledit serveur et un second identifiant dudit dispositif,
- transmettre (506) vers un second terminal ladite donnée de contrôle,
- générer au moins une clef publique associée audit second identifiant,
- transmettre audit serveur, via ladite seconde connexion, ladite au moins une clef générée,
- mémoriser ledit second identifiant dudit dispositif et de ladite au moins une clef générée.

11. Serveur comprenant un dispositif de distribution d'une configuration selon la revendication 11.

12. Terminal comprenant un dispositif de configuration selon la revendication 12.

13. Système de distribution sécurisée d'une configuration destinée à au moins un premier terminal, le système étant **caractérisé en ce qu'**il comporte :
- un serveur comprenant des moyens pour transmettre, par l'intermédiaire d'une connexion utilisant un port de communication dérivé à partir d'un premier identifiant dudit premier terminal reçu dudit premier terminal dans un message d'établissement de ladite connexion, un message de contrôle à destination dudit premier terminal, le message comprenant au moins une donnée de contrôle en association avec ledit premier identifiant dudit premier terminal, recevoir en provenance d'un second terminal un message de confirmation comprenant ladite donnée de contrôle et un identifiant dudit second terminal, obtenir ledit premier identifiant dudit premier terminal mémorisé en association avec ladite donnée de contrôle reçue, générer et transmettre un second identifiant dudit premier terminal vers ledit premier terminal, ledit second identifiant comprenant un numéro de port de communication distinct du numéro de port de communication dérivé dudit premier identifiant, recevoir en provenance dudit premier terminal une clef publique générée par ledit premier terminal, et associer ladite clef publique reçue avec au moins une autorisation d'accès audit serveur,
- un premier terminal comprenant des moyens pour transmettre au serveur, dans un message d'établissement de la connexion, un premier identifiant dudit premier terminal, réceptionner, en provenance dudit serveur, un message de contrôle comprenant au moins une donnée de contrôle générée par le serveur et un second identifiant dudit premier terminal , transmettre ladite donnée de contrôle à un second terminal, générer au moins une clef publique associée audit second identifiant, transmettre audit serveur via ladite seconde connexion ladite au moins une clef générée, mémoriser ledit second identifiant dudit dispositif et de ladite au moins une clef générée,
- un second terminal comprenant des moyens pour réceptionner en provenance du premier terminal, un message comprenant ladite donnée de contrôle puis la transmettre avec un identifiant dudit second terminal audit serveur.

14. Programme d'ordinateur comprenant des instructions pour l'exécution des étapes d'un procédé de distribution d'une configuration selon l'une quelconque des revendication 1 à 3 et/ou des instructions pour l'exécution des étapes d'un procédé de réception d'une configuration selon l'une quelconque des revendications 4 à 8.

## Patentansprüche

1. Verfahren zum Verteilen einer Konfiguration, die für mindestens ein erstes Endgerät bestimmt ist, durch einen Server, wobei das Verfahren das Herstellen (300), auf Initiative eines ersten Endgeräts, einer Verbindung zwischen dem ersten Endgerät und dem Server umfasst, wobei die Verbindung dazu konfiguriert ist, mindestens eine Verbindungsanforderung, die durch den Server an einem Kommunikationsport empfangen wird, zu dem ersten Endgerät umzuleiten, wobei das Verfahren **dadurch gekennzeichnet ist, dass** der Kommunikationsport anhand einer ersten Kennung des ersten Endgeräts abgeleitet wird (301), die in einer Nachricht zur Herstellung der Verbindung empfangen wird, und dass, wenn die erste Kennung des ersten Endgeräts eine Kennung ist, die mit einer Vielzahl von Endgeräten assoziiert ist, das Verfahren die folgenden Schritte beinhaltet:
- Erzeugen und Speichern (303) eines Kontrolldatenelements in Assoziation mit der ersten Kennung des ersten Endgeräts,
- Übertragen (303), über die hergestellte Verbindung, einer Kontrollnachricht an das erste Endgerät, wobei die Nachricht mindestens das erzeugte Kontrolldatenelement umfasst,
- Empfangen (304), von einem zweiten Endgerät, einer Bestätigungsnachricht, die das Kontrolldatenelement und eine Kennung des zweiten Endgeräts umfasst,
- Bestimmen, dass die Kennung des zweiten Endgeräts eine Kennung eines vertrauenswürdigen Endgeräts ist, und wenn bestimmt wird, dass das zweite Endgerät ein vertrauenswürdiges Endgerät ist:
- Erhalten der ersten Kennung des ersten Endgeräts, die in Assoziation mit dem empfangenen Kontrolldatenelement gespeichert ist,
- Erzeugen und Übertragen einer zweiten Kennung des ersten Endgeräts an das erste Endgerät, wobei die zweite Kennung eine Kommunikationsportnummer umfasst, die sich von der Kommunikationsportnummer, die von der ersten Kennung abgeleitet ist, unterscheidet,
- Empfangen, von dem ersten Endgerät, eines öffentlichen Schlüssels, der durch das erste Endgerät als Reaktion auf das Empfangen der zweiten Kennung erzeugt wird, und
- Assoziieren des empfangenen öffentlichen Schlüssels mit mindestens einer Zugriffsberechtigung für den Server.

2. Verfahren nach einem der vorhergehenden Ansprüche, wobei das Herstellen, auf Initiative des ersten Endgeräts, einer Verbindung zwischen dem ersten Endgerät und dem Server die folgenden Schritte umfasst:
- Empfangen eines Befehls zur Herstellung einer ersten sicheren Verbindung von dem ersten Endgerät, wobei der Befehl die erste Kennung des ersten Endgeräts umfasst,
- Ableiten einer Kommunikationsportnummer anhand der empfangenen ersten Kennung des ersten Endgeräts,
- Herstellen, über die erste Verbindung, einer zweiten sicheren Verbindung zwischen dem Server und dem ersten Endgerät, die dazu konfiguriert ist, Verbindungen, die an der abgeleiteten Kommunikationsportnummer eingehen, zu dem ersten Endgerät umzuleiten.

3. Verfahren nach einem der Ansprüche 1 bis 2, wobei die Herstellung einer Verbindung von dem ersten Endgerät verweigert wird, wenn bereits eine Verbindung mit einem Endgerät hergestellt ist, das die gleiche Endgerätkennung wie das erste Endgerät aufweist.

4. Verfahren zum Empfangen, durch ein erstes Endgerät, einer durch einen Server verteilten Konfiguration, wobei das erste Endgerät mit einem ersten Kommunikationsnetzwerk verbunden ist, wobei das Verfahren das Herstellen, auf Initiative des ersten Endgeräts, einer ersten Verbindung zwischen dem ersten Endgerät und dem Server umfasst, wobei die erste Verbindung dazu konfiguriert ist, eine zweite Verbindung von dem Server zu dem ersten Endgerät über die erste Verbindung herzustellen, wobei das Verfahren **dadurch gekennzeichnet ist, dass** das erste Endgerät in einer Nachricht zur Herstellung der ersten Verbindung eine Kennung des ersten Endgeräts überträgt, wobei die Kennung eine Kommunikationsportnummer umfasst, und dass, wenn die Kennung des ersten Endgeräts eine Kennung ist, die mit einer Vielzahl von Endgeräten assoziiert ist, das Verfahren die folgenden Schritte beinhaltet:
- Empfangen (203) einer Kontrollnachricht, die mindestens ein durch den Server erzeugtes Kontrolldatenelement umfasst, von dem Server über die zweite Verbindung,
- Übertragen (203) des Kontrolldatenelements an ein zweites Endgerät,
- Empfangen einer zweiten Kennung des ersten Endgeräts von dem Server über die zweite Verbindung,
- Erzeugen mindestens eines öffentlichen Schlüssels, der mit der zweiten Kennung assoziiert ist,
- Übertragen des mindestens einen erzeugten Schlüssels über die zweite Verbindung an den Server und
- Speichern der zweiten Kennung des ersten Endgeräts und des mindestens einen erzeugten Schlüssels.

5. Verfahren nach Anspruch 4, wobei der Schritt des Herstellens der ersten Verbindung zwischen dem ersten Endgerät und dem Server die folgenden Unterschritte umfasst:
- Senden eines Befehls zur Herstellung der ersten sicheren Verbindung an den Server, wobei der Befehl eine erste Kennung des ersten Endgeräts umfasst, die anhand einer anfänglichen Konfiguration des ersten Endgeräts erhalten wird, wobei die erste Kennung eine Portnummer umfasst,
- Empfangen eines Befehls zur Herstellung einer zweiten sicheren Verbindung über die mit dem Server hergestellte erste sichere Verbindung.

6. Verfahren nach einem der Ansprüche 4 bis 5, wobei es bei Detektion einer Verweigerung einer Herstellung der ersten Verbindung ferner das Auslösen eines Countdown-Timers umfasst, bei dessen Ablauf ein neuer Verbindungsversuch erfolgt.

7. Verfahren nach Anspruch 6, wobei der neue Verbindungsversuch das Übertragen einer Nachricht zur Herstellung der ersten Verbindung umfasst, die eine Kennung des ersten Endgeräts umfasst, wobei die Kennung eine Portnummer umfasst, die sich von der Portnummer, die in der ersten Kennung des ersten Endgeräts enthalten ist, unterscheidet.

8. Verfahren nach einem der Ansprüche 4 bis 7, wobei der Schritt des Übertragens des Kontrolldatenelements an ein Endgerät, das sich von dem ersten Endgerät unterscheidet, einen Schritt des Anzeigens des Kontrolldatenelements auf einem Bildschirm des ersten Endgeräts umfasst.

9. Vorrichtung zum Verteilen einer Konfiguration an mindestens ein erstes Endgerät, wobei die Vorrichtung Mittel zur Herstellung einer Verbindung mit einem ersten Endgerät auf Initiative des ersten Endgeräts umfasst, wobei die Verbindung dazu konfiguriert ist, Verbindungsanforderungen, die durch die Vorrichtung an einem Kommunikationsport empfangen werden, zu dem ersten Endgerät umzuleiten, wobei die Vorrichtung **dadurch gekennzeichnet ist, dass** sie Folgendes beinhaltet:
- Mittel (405) zum Ableiten einer Nummer des Kommunikationsports anhand einer ersten Kennung des ersten Endgeräts, die in einer Nachricht zur Herstellung der Verbindung empfangen wird,
- Mittel (406) zum Verifizieren, dass die erste Kennung des ersten Endgeräts eine Kennung ist, die mit einer Vielzahl von Endgeräten assoziiert ist,
- Mittel (407) zum Erzeugen und Speichern eines Kontrolldatenelements in Assoziation mit der ersten Kennung des ersten Endgeräts,
- ein Kommunikationsmodul (404), das dazu angepasst ist, über die hergestellte Verbindung eine Kontrollnachricht an das erste Endgerät zu übertragen, wobei die Nachricht mindestens das erzeugte Kontrolldatenelement umfasst,
- wobei das Kommunikationsmodul ferner dazu angepasst ist, eine Bestätigungsnachricht von einem zweiten Endgerät zu empfangen, die das Kontrolldatenelement und eine Kennung des zweiten Endgeräts umfasst,
- Mittel (409) zum Bestimmen, dass die Kennung des zweiten Endgeräts eine Kennung eines vertrauenswürdigen Endgeräts ist,
- Mittel zum Erhalten der ersten Kennung des ersten Endgeräts, die in Assoziation mit dem empfangenen Kontrolldatenelement gespeichert ist,
- Mittel zum Erzeugen einer zweiten Kennung des ersten Endgeräts,
- Mittel zum Übertragen, an das erste Endgerät, der zweiten Kennung, die eine Kommunikationsportnummer umfasst, die sich von der Kommunikationsportnummer, die von der ersten Kennung abgeleitet ist, unterscheidet,
- Mittel zum Empfangen, von dem ersten Endgerät, eines öffentlichen Schlüssels, der durch das erste Endgerät als Reaktion auf das Empfangen der zweiten Kennung erzeugt wird,
- Mittel zum Assoziieren des empfangenen öffentlichen Schlüssels mit mindestens einer Zugriffsberechtigung für den Server.

10. Vorrichtung, die durch einen Server konfigurierbar ist, wobei die Vorrichtung mit einem ersten Kommunikationsnetzwerk verbunden ist und Kommunikationsmittel (504) umfasst, die dazu angepasst sind, eine erste Verbindung zu dem Server herzustellen, wobei die erste Verbindung dazu konfiguriert ist, eine zweite Verbindung von dem Server zu der Vorrichtung über die erste Verbindung herzustellen, wobei die Vorrichtung **dadurch gekennzeichnet ist, dass** die Kommunikationsmittel ferner konfiguriert sind zum:
- Übertragen einer ersten Kennung der Vorrichtung in einer Nachricht zur Herstellung der Verbindung, wobei die erste Kennung eine Kommunikationsportnummer umfasst,
- Empfangen, von dem Server über die zweite Verbindung, einer Kontrollnachricht, die mindestens ein von dem Server erzeugtes Kontrolldatenelement und eine zweite Kennung der Vorrichtung umfasst,
- Übertragen (506) des Kontrolldatenelements an ein zweites Endgerät,
- Erzeugen mindestens eines öffentlichen Schlüssels, der mit der zweiten Kennung assoziiert ist,
- Übertragen des mindestens einen erzeugten Schlüssels über die zweite Verbindung an den Server,
- Speichern der zweiten Kennung der Vorrichtung und des mindestens einen erzeugten Schlüssels.

11. Server, der eine Vorrichtung zum Verteilen einer Konfiguration nach Anspruch 11 umfasst.

12. Endgerät, das eine Konfigurationsvorrichtung nach Anspruch 12 umfasst.

13. System zum sicheren Verteilen einer Konfiguration, die für mindestens ein erstes Endgerät bestimmt ist, wobei das System **dadurch gekennzeichnet ist, dass** es Folgendes beinhaltet:
- einen Server, umfassend Mittel zum Übertragen, mit Hilfe einer Verbindung, die einen Kommunikationsport verwendet, der anhand einer ersten Kennung des ersten Endgeräts abgeleitet ist, die von dem ersten Endgerät in einer Nachricht zur Herstellung der Verbindung empfangen wird, einer Kontrollnachricht an das erste Endgerät, wobei die Nachricht mindestens ein Kontrolldatenelement in Assoziation mit der ersten Kennung des ersten Endgeräts umfasst, Empfangen, von einem zweiten Endgerät, einer Bestätigungsnachricht, die das Kontrolldatenelement und eine Kennung des zweiten Endgeräts umfasst, Erhalten der ersten Kennung des ersten Endgeräts, die in Assoziation mit dem empfangenen Kontrolldatenelement gespeichert ist, Erzeugen und Übertragen einer zweiten Kennung des ersten Endgeräts an das erste Endgerät, wobei die zweite Kennung eine Kommunikationsportnummer umfasst, die sich von der Kommunikationsportnummer, die von der ersten Kennung abgeleitet ist, unterscheidet, Empfangen, von dem ersten Endgerät, eines öffentlichen Schlüssels, der durch das erste Endgerät erzeugt wird, und Assoziieren des empfangenen öffentlichen Schlüssels mit mindestens einer Zugriffsberechtigung für den Server,
- ein erstes Endgerät, umfassend Mittel zum Übertragen, an den Server, einer ersten Kennung des ersten Endgeräts in einer Nachricht zur Herstellung der Verbindung, Empfangen, von dem Server, einer Kontrollnachricht, die mindestens ein durch den Server erzeugtes Kontrolldatenelement und eine zweite Kennung des ersten Endgeräts umfasst, Übertragen des Kontrolldatenelements an ein zweites Endgerät, Erzeugen mindestens eines öffentlichen Schlüssels, der mit der zweiten Kennung assoziiert ist, Übertragen des mindestens einen erzeugten Schlüssels über die zweite Verbindung an den Server, Speichern der zweiten Kennung der Vorrichtung und des mindestens einen erzeugten Schlüssels,
- ein zweites Endgerät, umfassend Mittel zum Empfangen, von dem ersten Endgerät, einer Nachricht, die das Kontrolldatenelement umfasst, und dann Übertragen desselben mit einer Kennung des zweiten Endgeräts an den Server.

14. Computerprogramm, das Anweisungen zum Durchführen der Schritte eines Verfahrens zum Verteilen einer Konfiguration nach einem der Ansprüche 1 bis 3 und/oder Anweisungen zum Durchführen der Schritte eines Verfahrens zum Empfangen einer Konfiguration nach einem der Ansprüche 4 bis 8 umfasst.

## Claims

1. Method for distributing, by way of a server, a configuration intended for at least one first terminal, the method comprising establishing (300), on the initiative of a first terminal, a connection between said first terminal and the server, said connection being configured to redirect at least one connection request received by the server on a communication port to said first terminal, the method being **characterized in that** the communication port is derived (301) from a first identifier of said first terminal that is received in a message establishing said connection, and **in that**, when said first identifier of said first terminal is an identifier associated with a plurality of terminals, the method includes the following steps:
- generating and storing (303) an item of control data in association with said first identifier of said first terminal,
- transmitting (303), via said established connection, a control message to said first terminal, the message comprising at least said generated item of control data,
- receiving (304), from a second terminal, a confirmation message comprising said item of control data and an identifier of said second terminal,
- determining that the identifier of said second terminal is an identifier of a trusted terminal, and when said second terminal is determined to be a trusted terminal:
- obtaining said first identifier of said first terminal stored in association with said received item of control data,
- generating and transmitting a second identifier of said first terminal to said first terminal, said second identifier comprising a communication port number different from the communication port number derived from said first identifier,
- receiving, from said first terminal, a public key generated by said first terminal in response to the reception of the second identifier, and
- associating said received public key with at least authorization to access said server.

2. Method according to the preceding claim, wherein the establishment, on the initiative of said first terminal, of a connection between said first terminal and the server comprises the following steps:
- Receiving a command to establish a first secure connection from said first terminal, the command comprising said first identifier of said first terminal,
- Deriving a communication port number from said received first identifier of said first terminal,
- Establishing a second secure connection between the server and said first terminal via said first connection, and configured to redirect incoming connections on said derived communication port number to said first terminal.

3. Method according to either one of Claims 1 and 2, such that the establishment of a connection originating from said first terminal is denied when a connection is already established with a terminal having the same terminal identifier as said first terminal.

4. Method for receiving, by way of a first terminal, a configuration distributed by a server, said first terminal being connected to a first communication network, the method comprising establishing, on the initiative of said first terminal, a first connection between said first terminal and said server, said first connection being configured to establish a second connection via said first connection from said server to said first terminal, the method being **characterized in that** said first terminal transmits, in a message establishing said first connection, an identifier of said first terminal, said identifier comprising a communication port number, and **in that**, when the identifier of said first terminal is an identifier associated with a plurality of terminals, the method comprises the following steps:
- receiving (203), via said second connection and from said server, a control message comprising at least one item of control data generated by said server,
- transmitting (203) said item of control data to a second terminal,
- receiving, via said second connection, a second identifier of said first terminal from said server,
- generating at least one public key associated with the second identifier,
- transmitting said at least one generated key to said server via said second connection, and
- storing the second identifier of said first terminal and said at least one generated key.

5. Method according to Claim 4, wherein the step of establishing said first connection between said first terminal and the server comprises the following substeps:
- sending a command to establish said first secure connection to the server, the command comprising a first identifier of said first terminal obtained from an initial configuration of said first terminal, said first identifier comprising a port number,
- receiving, via said first secure connection established with the server, a command to establish a second secure connection.

6. Method according to either one of Claims 4 and 5, such that it furthermore comprises, upon detection of a denial to establish said first connection, triggering a countdown timer at the expiry of which a new connection attempt is made.

7. Method according to Claim 6, wherein the new connection attempt comprises transmitting a message establishing said first connection comprising an identifier of said first terminal, the identifier comprising a port number different from the port number contained in said first identifier of said first terminal.

8. Method according to any one of Claims 4 to 7, wherein the step of transmitting the item of control data to a terminal different from said first terminal comprises a step of displaying said item of control data on a screen of said first terminal.

9. Device for distributing a configuration to at least one first terminal, the device comprising means for establishing a connection with a first terminal on the initiative of said first terminal, said connection being configured to redirect connection requests received by the device on a communication port to said first terminal, the device being **characterized in that** it includes:
- means (405) for deriving a number of said communication port from a first identifier of said first terminal that is received in a message establishing said connection,
- means (406) for verifying that said first identifier of said first terminal is an identifier associated with a plurality of terminals,
- means (407) for generating and storing an item of control data in association with said first identifier of said first terminal,
- a communication module (404) designed to transmit, via said established connection, a control message to said first terminal, the message comprising at least said generated item of control data,
- the communication module furthermore being designed to receive, from a second terminal, a confirmation message comprising said item of control data and an identifier of the second terminal,
- means (409) for determining that said identifier of said second terminal is an identifier of a trusted terminal,
- means for obtaining said first identifier of said first terminal stored in association with said received item of control data,
- means for generating a second identifier of said first terminal,
- means for transmitting, to said first terminal, said second identifier comprising a communication port number different from the communication port number derived from said first identifier,
- means for receiving, from said first terminal, a public key generated by said first terminal in response to the reception of the second identifier,
- means for associating said received public key with at least authorization to access said server.

10. Device able to be configured by a server, the device being connected to a first communication network and comprising communication means (504) designed to establish a first connection to said server, said first connection being configured to establish a second connection via said first connection, from said server to said device, said device being **characterized in that** the communication means are furthermore configured to:
- transmit, in a message establishing the connection, a first identifier of said device, said first identifier comprising a communication port number,
- receive, from the server and via said second connection, a control message comprising at least one item of control data generated by said server and a second identifier of said device,
- transmit (506) said item of control data to a second terminal,
- generate at least one public key associated with said second identifier,
- transmit said at least one generated key to said server via said second connection,
- store said second identifier of said device and said at least one generated key.

11. Server comprising a device for distributing a configuration according to Claim 11.

12. Terminal comprising a configuration device according to Claim 12.

13. System for the secure distribution of a configuration intended for at least one first terminal, the system being **characterized in that** it includes:
- a server comprising means for transmitting, via a connection using a communication port derived from a first identifier of said first terminal received from said first terminal in a message establishing said connection, a control message to said first terminal, the message comprising at least one item of control data in association with said first identifier of said first terminal, receiving, from a second terminal, a confirmation message comprising said item of control data and an identifier of said second terminal, obtaining said first identifier of said first terminal stored in association with said received item of control data, generating and transmitting a second identifier of said first terminal to said first terminal, said second identifier comprising a communication port number different from the communication port number derived from said first identifier, receiving, from said first terminal, a public key generated by said first terminal, and associating said received public key with at least authorization to access said server,
- a first terminal comprising means for transmitting, to the server, in a message establishing the connection, a first identifier of said first terminal, receiving, from said server, a control message comprising at least one item of control data generated by the server and a second identifier of said first terminal, transmitting said item of control data to a second terminal, generating at least one public key associated with said second identifier, transmitting said at least one generated key to said server via said second connection, storing said second identifier of said device and said at least one generated key,
- a second terminal comprising means for receiving, from the first terminal, a message comprising said item of control data and then transmitting it, with an identifier of said second terminal, to said server.

14. Computer program comprising instructions for executing the steps of a method for distributing a configuration according to any one of Claims 1 to 3 and/or instructions for executing the steps of a method for receiving a configuration according to any one of Claims 4 to 8.
